# EUROPEAN PATENT APPLICATION

(11) **EP 4 542 274 A1**
(43) Date of publication of application: **23.04.2025**
(21) Application number: 23306834.5
(22) Date of filing: 19.10.2023
(51) Int. Cl.: G02B 6/35

(54) **COMPACT MODE-WAVELENGTH SELECTIVE SWITCH AND ROADM FOR SMF/MMF/MCF FIBERS**

(71) Applicant: Nokia Solutions and Networks Oy, 02610 Espoo (FI)
(72) Inventor: Boddeda, Rajiv, 91300 MASSY (FR)
(74) Representative: Novagraaf Technologies

(57) **Abstract**

A Mode-Wavelength Selective Switch (MWSS) (10) comprising:
- at least one input path (12) for receiving input optical signals (20) combined using space division multiplexing in an input optical fiber (14) supporting several spatial modes or containing multiple cores,
- at least one output path (16) for emitting an output optical signal (22) in an output optical fiber (18),
- a mode separator module (24) configured to separate spatially the input optical signals (20) into at least two intermediate optical signals (28); and
- an array of beam steering mirrors (26) configured to redirect the intermediate optical signals (28) inside the MWSS (10), at least one of the intermediate optical signals (28) being redirected towards the at least one output path (16).

## Description

### TECHNICAL FIELD

The disclosure relates to a Mode-Wavelength Selective Switch (MWSS), to a Reconfigurable Optical Add Drop Multiplexer (ROADM) and to a router comprising such MWSS.

### BACKGROUND

As the current optical single mode fiber communications are reaching the Shannon limits, the next generation optical communication systems are incorporating Space Division Multiplexing (SDM). Space Division Multiplexing techniques are a key solution to further push the capacity of short reach applications.

Space Division Multiplexing can be obtained using two different methods among which:
- the combination of signals using a Multi Core Fiber (MCF) using different spatial cores, and
- the juxtaposition of signals using different modes of a Multi-Mode Fiber (MMF) In optical fiber systems which incorporate MMF/MCF fibers, the capacity can go beyond petabits per second.

To retrieve streams of information at some nodes of the optical communication system, the optical signals are demultiplexed. In the current systems, the optical signals of MMF are demultiplexed in two steps:
- First, a mode-demultiplexer is used to convert the MMF signal into multiple mono-mode signals that could be transmitted to Single-Mode Fibers (SMF),
- Then, a Wavelength Selective Switch (WSS) is used to selectively transmit some optical signals of the SMF based on their wavelength.

These two steps, which include passing through SMF, generate a lot of losses and complexity in optical communication systems.

Therefore, there is a need for devices able to selectively transmit Space-Division Wavelength Division multiplexed (SDM-WDM) optical signals in a high-performance and compact way.

### SUMMARY

The scope of protection is set out by the independent claims. The embodiments, examples, and features, if any, described in this specification that do not fall under the scope of the protection are to be interpreted as examples useful for understanding the various embodiments or examples that fall under the scope of protection.

The disclosure proposes a Mode-Wavelength Selective Switch (MWSS) comprising:
- at least one input path for receiving input optical signals combined using space division multiplexing in an input optical fiber supporting several spatial modes or containing multiple cores,
- at least one output path for emitting an output optical signal in an output optical fiber,
- a mode separator module configured to separate spatially the input optical signals into at least two intermediate optical signals; and
- an array of beam steering mirrors configured to redirect the intermediate optical signals inside the MWSS, at least one of the intermediate optical signals being redirected towards the at least one output path.

Other aspects of the disclosure are listed below.

The MWSS can be such that:
- the input path is configured to be interfaced with an input optical fiber that is a Multi-Mode Fiber (MMF) supporting several spatial modes,
- the mode separator module comprises a Multi Plane Light Conversion (MPLC) device configured to separate spatially the spatial modes supported by the input optical fiber into the intermediate optical signals.

The MWSS can be such that:
- the input path is configured to be interfaced with an input optical fiber that is a Multi-Core Fiber (MCF) containing multiple cores,
- the mode separator module comprises a micro-lens array configured to separate spatially the signal of at least one of the cores of the input optical fiber into the intermediate optical signals.

The MWSS can be such that:
- the MWSS comprises at least two input paths among which:
   - a first input path configured to be interfaced with a first input optical fiber that is a Multi-Mode Fiber (MMF) supporting several spatial modes,
   - a second input path configured to be interfaced with a second input optical fiber that is a Multi-Core Fiber (MCF) containing multiple cores,
- the mode separator module comprises:
   - a MPLC device configured to separate spatially the spatial modes supported by the first input optical fiber into intermediate optical signals, and
   - a micro-lens array configured to separate spatially the signals of at least one of the cores of the second input optical fiber into intermediate optical signals.

The MWSS can be such that the orientation of at least one mirror of the array of beam steering mirrors is adjustable around two orthogonal axes.

The MWSS can be such that:
- the MWSS comprises a space division multiplexer configured to create the output optical signal from a combination of signals it has received using space division multiplexing,
- the array of beam steering mirrors is configured to redirect at least one of the intermediate optical signals towards the space division multiplexer.

The MWSS can be such that the space division multiplexer comprises a MPLC device or a micro-lens array.

The MWSS can be such that the space division multiplexer is part of the mode separator module.

The MWSS can be such that the array of beam steering mirrors is configured to redirect one of the intermediate optical signals towards the output path.

The MWSS can be such that it also comprises:
- a wavelength division module positioned between the mode separator module and the array of beam steering mirrors configured to separate spatially the intermediate optical signals according to their wavelength into unitary optical signals having a single wavelength.

The MWSS can be such that the wavelength division module comprises gratings.

The MWSS can be such that the mode separator module separates spatially the signals along a first rectilinear direction.

The MWSS can be such that the wavelength division module separates spatially the signals along a second rectilinear direction orthogonal to the first rectilinear direction.

The MWSS can be such that the MWSS comprises at least two arrays of beam steering mirrors.

The disclosure also proposes a Reconfigurable Optical Add Drop Multiplexer (ROADM) comprising at least a MWSS according to the disclosure.

The disclosure also proposes a router comprising at least a MWSS according to the disclosure.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG. 1 illustrates schematically a Mode-Wavelength Selective Switch (MWSS) according to a first embodiment of the disclosure.
FIG. 2 illustrates schematically a portion of a Mode-Wavelength Selective Switch (MWSS) comprising a mode multiplexer/de-multiplexer (such as multi-plane light conversion (MPLC)) device according to a second embodiment of the disclosure and adapted to input fibers of the MMF type.
FIG. 3 illustrates schematically a portion of a Mode-Wavelength Selective Switch (MWSS) comprising a micro-lens array according to a third embodiment of the disclosure and adapted to input fibers of the MCF type.
FIG. 4 illustrates schematically a Mode-Wavelength Selective Switch (MWSS) comprising a space division multiplexer according to a fourth embodiment of the disclosure and adapted to output fibers of the MMF type.
FIG. 5 illustrates schematically a compact Mode-Wavelength Selective Switch (MWSS) comprising a MPLC device according to a fifth embodiment of the disclosure and adapted to input fibers and output fibers of the MMF type.
FIG. 6 illustrates schematically a compact Mode-Wavelength Selective Switch (MWSS) comprising a micro-lens array according to a sixth embodiment of the disclosure and adapted to input fibers and output fibers of the MCF type.
FIG. 7 illustrates schematically a compact Mode-Wavelength Selective Switch (MWSS) comprising both a MPLC device and a micro-lens array according to a seventh embodiment of the disclosure and adapted to input fibers of both the MMF and the MCF types and to output fibers of the MMF type.
FIG. 8 illustrates schematically a compact Mode-Wavelength Selective Switch (MWSS) comprising both a MPLC device and a micro-lens array according to a eighth embodiment of the disclosure and adapted to input fibers of MMF type and to output fibers of both the MMF and the MCF types.
FIG. 9 illustrates schematically a portion of a Mode-Wavelength Selective Switch (MWSS) comprising a MPLC device and a wavelength division module according to a nineth embodiment of the disclosure.
FIG. 10 illustrates schematically a portion of a Mode-Wavelength Selective Switch (MWSS) comprising a micro-lens array and a wavelength division module according to a tenth embodiment of the disclosure.
FIG. 11 illustrates schematically a compact Mode-Wavelength Selective Switch (MWSS) comprising two arrays of beam steering mirrors according to a eleventh embodiment of the disclosure.
FIG. 12 illustrates schematically a Reconfigurable Optical Add Drop Multiplexer (ROADM) according to an embodiment of the disclosure.

It should be noted that these drawings are intended to illustrate various aspects of devices used in example embodiments described herein.

### DETAILED DESCRIPTION

Detailed example embodiments are disclosed herein. However, specific structural and/or functional details disclosed herein are merely representative for purposes of describing example embodiments and providing a clear understanding of the underlying principles. Thus, these example embodiments may be practiced without these specific details. Moreover, the example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present disclosure, while eliminating, for purposes of clarity, many other elements that may be well known in the art or not relevant for the understanding of the disclosure.

For the description of the disclosure and the understanding of the claims, the vertical, longitudinal, and transverse orientations according to the reference frame V, L, T shown in the figures, whose longitudinal L and transverse T axes extend in a horizontal plane, will be adopted as non-limiting and without restrictive reference to terrestrial gravity. By convention, the longitudinal axis L is oriented from back to front, the transversal axis T is oriented from right to left and the vertical axis V is oriented from bottom to top.

In the figures, the dotted arrows show the optical paths.

In the following description, identical, similar or analogous elements will be referred to by the same reference numbers.

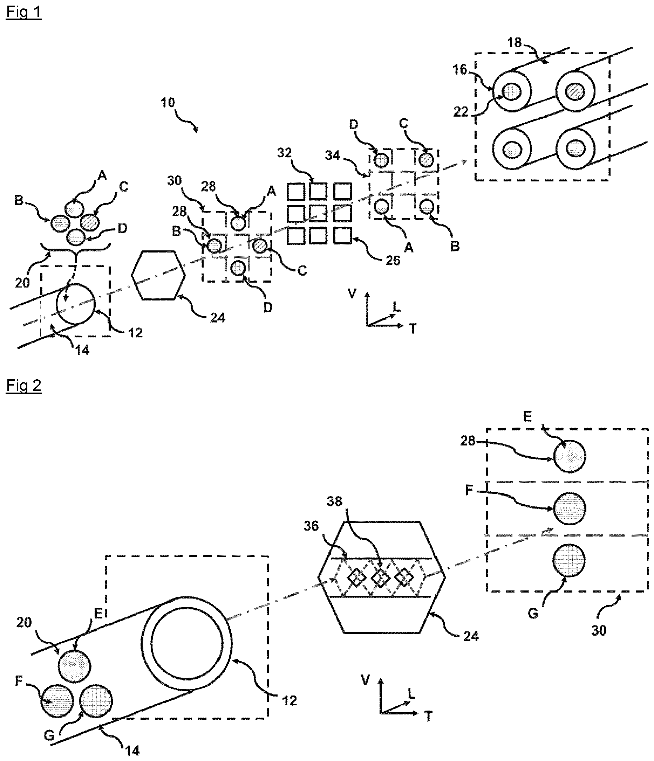

Figure 1 illustrates an example embodiment of a Mode-Wavelength Selective Switch (MWSS) 10 according to the disclosure. The MWSS can dynamically route, block and attenuate an optical signal within an optical network node. That is to say, the MWSS selectively transmits optical signals from input fibers to output fibers.

As represented schematically by Figure 1, the MWSS 10 may include at least:
- an input path 12 suitable to be connected to an input optical fiber 14,
- an output path 16 suitable to be connected to an output optical fiber 18. In the example, the MWSS comprises four output path 16. Four output fibers 18 are connected to the four output paths 16 respectively.

The input path 12 receives input optical signals 20 from the input optical fiber 14. The input optical signals 20 are combined using Space Division Multiplexing (SDM). SDM can be obtained using two different methods among which:
- the combination in a fiber of signals put into different spatial modes, and
- the juxtaposition in a fiber of signals contained in different cores of the fiber.

An output path 16 emits an output optical signal 22 in an output optical fiber 18. The output optical signal 22 is obtained through the processing of the input optical signals 20. The processing of the input optical signals 20 comprises Space Division (SD), possibly Wavelength Division (WD) and re-routing.

To perform the processing of the input optical signals 20, the MWSS 10 comprises:
- a mode separator module 24 suitable to perform Space Division of signals, and
- an array of beam steering mirrors 26 to perform re-routing of signals.

The mode separator module 24 is configured to separate spatially the input optical signals 20 into several intermediate optical signals 28 as shown on a first virtual screen 30 partitioned into nine imaginary zones divided into three rows and three columns. By convention, the first row is the top row and the first column is the left column. Indeed, the input optical signals 20 comprise four combined signals among which a first signal A, a second signal B, a third signal C and a fourth signal D. After passing through the mode separator module 24, the input optical signals 20 have been separated spatially into four intermediate optical signals 28 distributed as follows on the virtual screen:
- the first signal A is positioned in the first row and the second column of the first virtual screen 30,
- the second signal B is positioned in the second row and the first column of the first virtual screen 30,
- the third signal C is positioned in the second row and the third column of the first virtual screen 30, and
- the fourth signal D is positioned in the third row and the second column of the first virtual screen 30.

The array of beam steering mirrors 26 is made of multiple mirrors 32 positioned in several rows and several columns.

The array of beam steering mirrors 26 is for example a micromirror device based on microscopically small mirrors. The mirrors are Micro-Electro-Mechanical Systems (MEMS), which means that their states are controlled by applying a voltage between the two electrodes around the mirror arrays. The array of beam steering mirrors 26 allows for light deflection and control.

In the example of figure 1, the array of beam steering mirrors 26 is made of 9 mirrors organized in three rows and three columns. The array of beam steering mirrors 26 is configured to redirect the intermediate optical signals 28 inside the MWSS as shown on a second virtual screen 34. An intermediate signal 28 is routed to a specific mirror 32 of the beam steering mirrors 26 so that it can be redirected by the mirror. In the example shown, each intermediate signal 28 is reoriented towards a specific area of the virtual screen 34 as follows:
- the first signal A is re-routed towards the third row and the first column of the second virtual screen 34,
- the second signal B is re-routed towards the third row and the third column of the second virtual screen 34,
- the third signal C is re-routed towards the first row and the third column of the second virtual screen 34, and
- the fourth signal D is re-routed towards the first row and the first column of the first screen 30.

Thanks to the re-routing operated by the array of beam steering mirrors 26, the signals A, B, C and D are directed towards a specific output path 16 of the MWSS 10.

Consequently, the input optical signals 20 after passing through the MWSS are now split into four output signals 22 that are emitted by a different output path 16 of the MWSS into respectively four output fibers 18.

The array of beam steering mirrors 26 can be reconfigured in order to change the re-routing of intermediate optical signals 28. Consequently, depending on the configuration of the array of beam steering mirrors 26, the signals A, B, C and D can be directed towards a different output path 16 of the MWSS 10.

The array of beam steering mirrors 26 can be reconfigured by changing the orientation of the mirrors 32. In the example, the orientation of the mirrors 32 is adjustable around two orthogonal axes among which a horizontal axis and a vertical axis. The orientation of the mirrors can be adjusted by changing the voltage applied between the two electrodes around the mirror arrays.

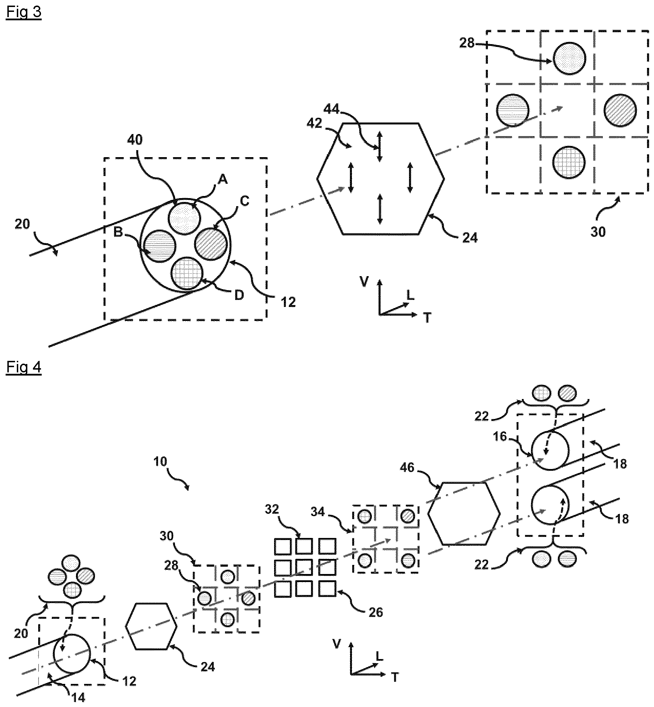

Figures 2 and 3 aim to illustrate the different types of Space Division and thus the different types of devices used in the mode separator module 24.

Figure 2 illustrates the Space Division Multiplexing relying on the combination in a fiber of signals put into different spatial modes. This technic is also called mode division. The principle of the mode division is to use several shapes of light simultaneously in a Multi-Mode Fiber (MMF) as if they were independent channels. The mode division enables a bandwidth increase in the optical fibers. Each spatial mode is used for one transmission channel. A spatial mode can contain several wavelengths.

In the example of figure 2, the input path 12 is configured to be interfaced with an input optical fiber 14 that is a Multi-Mode Fiber (MMF) supporting several spatial modes, among which a first spatial mode E, a second spatial mode F and a third spatial mode G.

The mode separator module 24 comprises a Multi Plane Light Conversion (MPLC) device 36 configured to separate spatially the spatial modes E, F and G supported by the input optical fiber 14 into the intermediate optical signals 28. The MPLC device 36 is a versatile tool for manipulating spatial distributions of the optical field through repeated phase modulations. It consists of a series of phase masks 38 similar to highly complex lenses, separated by a specific propagation distance. The phase masks 38 can be arranged in several rows to reduce space requirements. Each one of the rows can be used to interface with one of the MMF fibers.

After passing through the MPLC device 36, the input optical signals 20 have been separated spatially into three intermediate optical signals 28 distributed vertically on the virtual screen 30, each intermediate optical signal 28 corresponding respectively to one of the spatial modes E, F and G.

Consequently, in the example of figure 2, the mode separator module 24 separates spatially the signals along a vertical rectilinear direction.

The MPLC device can be custom designed for the MWSS. In a particular implementation, the MPLC device separates a multimode into a single fundamental mode uniformly separated vertically, next to one another.

However, the MPLC device does not need to isolate each multimode necessarily into SMF. Indeed, the MPLC device only needs to isolate spatially the modes. Avoiding the use of SMF reduces losses. Moreover, a simpler mapping reduces the propagation losses in the MPLC device.

Figure 3 illustrates the Space Division Multiplexing relying on the juxtaposition in a fiber of signals contained in different cores of the fiber. In this case, a core contains only one spatial mode. However, in a core, the signal can contain different wavelengths.

In the example of figure 3, the input path 12 is configured to be interfaced with an input optical fiber 20 that is a Multi-Core Fiber (MCF) containing multiple cores 40. Each core 40 contains a signal among which a first signal A, a second signal B, a third signal C and a fourth signal D.

The mode separator module 24 comprises a micro-lens array 42 configured to separate spatially the signal of the cores 40 of the input optical fiber 12 into the intermediate optical signals 28. The micro-lens array 42 comprises several lens 44, for example four. A lens 44 is arranged on the trajectory of one of the signals A, B, C or D in order to separate the signals A, B, C or D from one another, for example by making them diverge.

After passing through the micro-lens array 42, the input optical signals 20 have been separated spatially into four intermediate optical signals 28 distributed in four distinct zones of the virtual screen 30, each intermediate optical signal 28 corresponding respectively to one of the signals A, B, C and D.

The embodiment of figure 3 is also adapted when the input optical fiber 12 is a Single-Mode Fiber (SMF). In this case, the input optical fiber 12 carries only one mode that can comprise different wavelengths.

The embodiment represented in figure 1 is a very simple case in which the array of beam steering mirrors 26 is configured to redirect directly the intermediate optical signals 28 towards the output paths 16. This is possible when the output fibers 18 do not carry multi-mode signals.

FIG. 4 illustrates an example embodiment of a Mode-Wavelength Selective Switch (MWSS) 10 wherein the output paths 16 are connected to fibers carrying output optical signals 22 which are combined using Space Division Multiplexing (SDM). SDM of the output optical signals 22 can be obtained using the following two different methods:
- the combination in a fiber of signals put into different spatial modes, and
- the juxtaposition in a fiber of signals contained in different cores of the fiber.

In the example of figure 4, the MWSS 10 comprises a space division multiplexer 46 configured to create an output optical signal 22 from a combination of signals it has received using space division multiplexing.

In this case, the array of beam steering mirrors 26 is configured to redirect the intermediate optical signals 28 towards the space division multiplexer 46.

If the output fibers 18 contain a Multi-Mode Fiber, as it is the case in figure 4, the space division multiplexer 46 may comprise a MPLC device.

If the output fibers 18 contain a Multi-Core Fiber, the space division multiplexer 46 may comprise a micro-lens array.

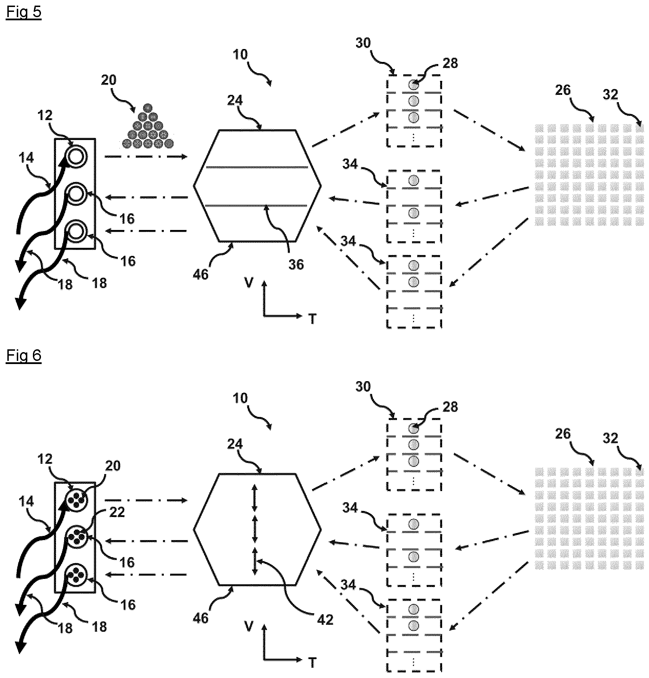

In the example embodiment of figure 5, the input fibers 14 and the output fibers 18 are Multi-Mode Fibers. In this example, the space division multiplexer 46 is part of the mode separator module 24. More precisely, the mode separator module 24 receiving the input signals 20 is a MPLC 36 that is also used as a space division multiplexer 46 to create the output signals 22.

In this case, the input paths 12 and the output paths 16 are next to each other, for example they are aligned vertically. This configuration allows to obtain a very compact MWSS 10.

In the example embodiment of figure 6, the input fibers 14 and the output fibers 18 are Multi-Core Fibers. In this example as well, the space division multiplexer 46 is part of the mode separator module 24. More precisely, the mode separator module 24 receiving the input signals 20 is a micro-lens array 42 that is also used as a space division multiplexer 46 to create the output signals 22.

In this case also, the input paths 12 and the output paths 16 are next to each other, for example they are aligned vertically. This configuration allows to obtain a very compact MWSS 10.

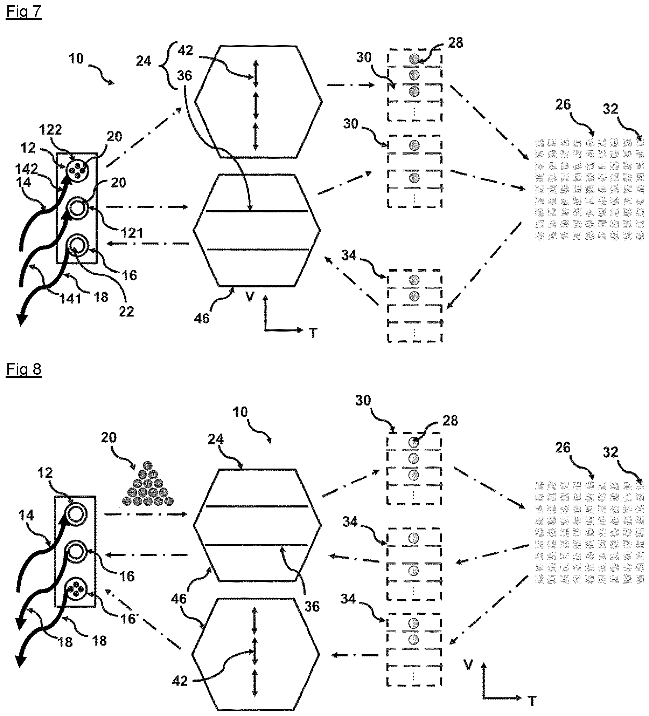

In the example of figure 7, the MWSS 10 comprises two input paths 12 among which:
- a first input path 121 configured to be interfaced with a first input optical fiber 141 that is a Multi-Mode Fiber (MMF) supporting several spatial modes, and
- a second input path 122 configured to be interfaced with a second input optical fiber 142 that is a Multi-Core Fiber (MCF) containing multiple cores.

The mode separator module 24 comprises:
- a MPLC device 36 configured to separate spatially the spatial modes supported by the first input optical fiber 141 into intermediate optical signals 28, and
- a micro-lens array 42 configured to separate spatially the signals of the cores of the second input optical fiber 142 into intermediate optical signals 28.

. In this example as well, the space division multiplexer 46 is part of the mode separator module 24. More precisely, the MPLC device 36 of the mode separator module 24 receiving the input signals 20 is also used as a space division multiplexer 46 to create the output signals 22.

In this case also, the input paths 12 and the output paths 16 are next to each other, for example they are aligned vertically. This configuration allows to obtain a very compact MWSS 10.

Figure 8 shows that the operation of the MWSS 10 of figure 7 can be reversed when the MWSS 20 comprises:
- an input path 12 configured to be interfaced with an input optical fiber 14 that is a Multi-Mode Fiber (MMF) supporting several spatial modes, and
- two output paths 16 among which one is configured to be interfaced with a Multi-Mode Fiber (MMF) supporting several spatial modes, and another is configured to be interfaced with a Multi-Core Fiber (MCF) containing multiple cores.

In this case, the mode separator module 24 comprises a MPLC device 36 to separate spatially the spatial modes supported by the input optical fiber 14. As for the space division multiplexer 46, it comprises the MPLC device 36 of the mode separator module 24 to create an output signal 22 for the output fiber 18 of the MMF type and a micro-lens array 42 to create an output signal 22 for the output fiber 18 of the MCF type.

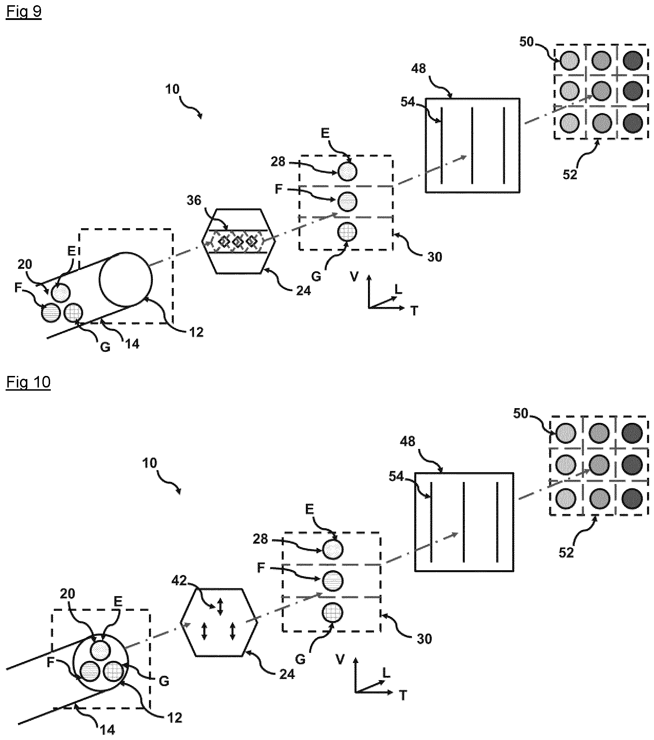

As shown in figures 9 and 10, the MWSS 10 can also comprise a wavelength division module 48 positioned between the mode separator module 24 and the array of beam steering mirrors 26. The wavelength division module 48 is configured to separate spatially the intermediate optical signals 28 according to their wavelength into unitary optical signals 50 having a single wavelength.

Figure 9 corresponds to the case in which the mode separator module 24 is a MPLC device 36 that separates vertically the different modes E, F and G of the intermediate optical signals 28. Then, as shown on a third virtual screen 52, each mode E, F or G is divided horizontally by the wavelength division module 48 into 3 unitary optical signals 50 of different wavelengths. As a result, nine unitary optical signals 50 are obtained that are divided on the third virtual screen 52 into three rows and three columns. The rows represent the mode division, the first row corresponding to the mode E, the second row corresponding to the mode F and the third row corresponding to the mode G The columns represent the wavelength vision, the first column corresponding to a first wavelength, the second column corresponding to a second wavelength and the third column corresponding to a third wavelength.

Figure 10 corresponds to the case in which the mode separator module 24 is a micro-lens array 42 that separates vertically the input signals E, F and G of the different cores of the input optical fiber 14. Then, as shown on a third virtual screen 52, each mode E, F or G is divided horizontally by the wavelength division module 48 into 3 unitary optical signals 50 of different wavelengths. As a result, nine unitary optical signals 50 are obtained that are divided on the third virtual screen 52 into three rows and three columns. The rows represent the space division and the columns represent the wavelength division.

In the examples of figures 9 and 10, the wavelength division module 48 comprises gratings 54.

In the examples of figures 9 and 10, the mode separator module 24 separates spatially the signals along a first rectilinear direction that is vertical. The wavelength division module 48 separates spatially the signals along a second rectilinear direction that is horizontal and that is orthogonal to the first rectilinear direction.

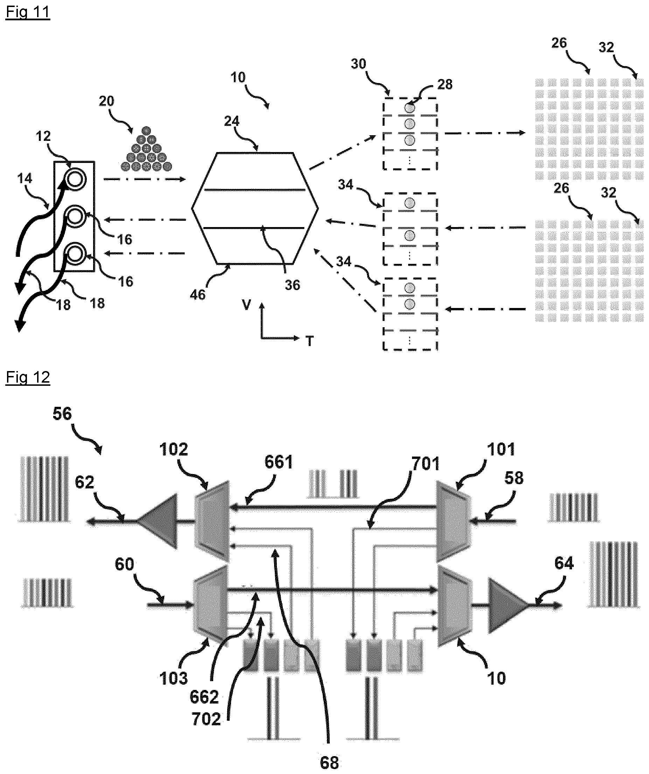

As shown in figure 11, the MWSS 10 can comprise two arrays of beam steering mirrors 26 or more. Multiple arrays of beam steering mirrors 26 allow to re-route the intermediate optical signals 28 in a more complex way inside the MWSS 10.

The two arrays of beam steering mirrors 26 create a tip and tilt system. By convention, tilt corresponds to the mirrors moving horizontally along a vertical axis and tip corresponds to the mirrors moving vertically along a horizontal axis.

In a basic implementation, the mirrors can tilt along only one particular direction. In this implementation, all the fibers ports (input and output paths) are placed along only one direction, for example along a vertical direction.

In a more complex MWSS, multiple ports are placed along both horizontal and vertical directions. In this case, the tip of the mirrors is used to switch/route wavelengths whereas the tilt is used to route the spatial modes of the light.

The disclosure also concerns a Reconfigurable Optical Add Drop Multiplexer (ROADM) 56 comprising at least a MWSS 10 according to the disclosure.

A ROADM 56 is a form of optical add-drop multiplexer that adds the ability to remotely switch traffic from a wavelength-division multiplexing (WDM) system at the wavelength layer. This is achieved through the use of a MWSS.

Figure 12 shows an example embodiment of such a ROADM 56 comprising four MWSS 10. In the example, the ROADM 56 receives a first input signal 58 and a second input signal 60. The ROADM 56 emits a first output signal 62 and a second output signal 64.

The first input signal 58 goes through a first MWSS 101 that divides it into a transmitted part of the first input signal 661 that is transmitted to a second MWSS 102 and into two dropped parts of the first input signal 701.

The second input signal 60 goes through a third MWSS 103 that divides it into a transmitted part of the second input signal 662 and into two dropped parts of the second input signal 702.

The second MWSS 102 combines the transmitted part of the first input signal 661 and two added parts from the second input signal 68 to create the first output signal 62.

The ROADM 56 has a symmetrical architecture and the second output signal 64 is created in a similar way to the first output signal 62, mutatis mutandis.

A MWSS 10 can also be incorporated into a router.

Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

There are multiple advantages to the use multiple light conversion system to separate physically the different modes in the multi-mode fiber in an orthogonal direction to the direction in which the grating system would separate the different wavelengths. By using such a system, one could avoid conversion of multimode systems to single mode systems before using WSS.

Moreover, it enables a SDM-WDM based ROADM solution compatible with combined signals while being compact.

Additionally, as it avoids the need for an intermediate decomposition of the signals into SMF fibers, it reduces considerably propagation/coupling losses. Indeed, the system is compact with low input/output coupling losses. Due to the compactness, the free space propagation losses due to beam divergence are limited.

The described embodiments allow to select/switch and re-direct specific signals to specific mode in multiple modes of various MMF fibers. More precisely, any mode can be switched to any other given SDM mode of multi-mode fiber (MMF).

The MWSS can be SDM-WDM reconfigurable switch thanks to a plurality of matrix with tip tilt capabilities.

Finally, all necessary components of this device are already commercialized, which should make it possible to develop market-ready solutions over the next decade.

### LEGEND

- 10: MWSS
- 12: input path
- 121: first input path
- 122: second input path
- 14: input optical fiber
- 141: first input optical fiber
- 142: second input optical fiber
- 16: output path
- 18: output optical fiber
- 20: input optical signals
- 22: output optical signals
- 24: mode separator module
- 26: array of beam steering mirrors
- 28: intermediate optical signals
- 30: first virtual screen
- 32: mirror
- 34: second virtual screen
- 36: Multi Plane Light Conversion (MPLC) device
- 38: phase mask
- 40: core
- 42: micro-lens array
- 44: lens
- 46: space division multiplexer
- 48: wavelength division module
- 50: unitary optical signal
- 52: third virtual screen
- 54: gratings
- 56: Reconfigurable Optical Add Drop Multiplexer (ROADM)
- 58: first input signal
- 60: second input signal
- 62: first output signal
- 64: second output signal
- 661: transmitted part of the first input signal
- 662: transmitted part of the second input signal
- 68: added part from the second input signal
- 701: dropped part of the first input signal
- 702: dropped part of the second input signal
- 101: first MWSS
- 102: second MWSS
- 103: third MWSS

### LIST OF MAIN ABBREVIATIONS

- WSS: Mode-Wavelength Selective Switch
- SDM: Space Division Multiplexing
- SD: Space Division
- WDM: Wavelength Division Multiplexing
- WD: Wavelength Division
- MEMS: Micro-Electro-Mechanical Systems
- MMF: Multi-Mode Fiber
- SMF: Single-Mode Fiber
- MCF: Multi-Core Fiber
- MPLC: Multi Plane Light Conversion
- ROADM: Reconfigurable Optical Add Drop Multiplexer

## Claims

1. A Mode-Wavelength Selective Switch (MWSS) (10) comprising:
- at least one input path (12) for receiving input optical signals (20) combined using space division multiplexing in an input optical fiber (14) supporting several spatial modes or containing multiple cores,
- at least one output path (16) for emitting an output optical signal (22) in an output optical fiber (18),
- a mode separator module (24) configured to separate spatially the input optical signals (20) into at least two intermediate optical signals (28); and
- an array of beam steering mirrors (26) configured to redirect the intermediate optical signals (28) inside the MWSS (10), at least one of the intermediate optical signals (28) being redirected towards the at least one output path (16).

2. The MWSS (10) according to claim 1, wherein:
- the input path (12) is configured to be interfaced with an input optical fiber (14) that is a Multi-Mode Fiber (MMF) supporting several spatial modes,
- the mode separator module (24) comprises a Multi Plane Light Conversion (MPLC) device (36) configured to separate spatially the spatial modes supported by the input optical fiber (14) into the intermediate optical signals (28).

3. The MWSS (10) according to claim 1, wherein:
- the input path (12) is configured to be interfaced with an input optical fiber (14) that is a Multi-Core Fiber (MCF) containing multiple cores (40),
- the mode separator module (24) comprises a micro-lens array (42) configured to separate spatially the signal of at least one of the cores (40) of the input optical fiber (14) into the intermediate optical signals (28).

4. The MWSS (10) according to any one of claims 1 to 3, wherein:
- the MWSS (10) comprises at least two input paths (12) among which:
- a first input path (121) configured to be interfaced with a first input optical fiber (141) that is a Multi-Mode Fiber (MMF) supporting several spatial modes,
- a second input path (122) configured to be interfaced with a second input optical fiber (142) that is a Multi-Core Fiber (MCF) containing multiple cores (40),
- the mode separator module (24) comprises:
- a MPLC device (36) configured to separate spatially the spatial modes supported by the first input optical fiber (141) into intermediate optical signals (28), and
- a micro-lens array (42) configured to separate spatially the signals of at least one of the cores (40) of the second input optical fiber (142) into intermediate optical signals (28).

5. The MWSS (10) according to any one of claims 1 to 4, wherein the orientation of at least one mirror (32) of the array of beam steering mirrors (26) is adjustable around two orthogonal axes.

6. The MWSS (10) according to any one of claims 1 to 5, wherein:
- the MWSS (10) comprises a space division multiplexer (46) configured to create the output optical signal (22) from a combination of signals it has received using space division multiplexing,
- the array of beam steering mirrors (26) is configured to redirect at least one of the intermediate optical signals (28) towards the space division multiplexer (46).

7. The MWSS (10) according to claim 6, in which the space division multiplexer (46) comprises a MPLC device (36) or a micro-lens array (42).

8. The MWSS (10) according to any one of claims 6 or 7, in which the space division multiplexer (46) is part of the mode separator module (24).

9. The MWSS (10) according to any one of claims 1 to 8, wherein the array of beam steering mirrors (26) is configured to redirect one of the intermediate optical signals (28) towards the output path (16).

10. The MWSS (10) according to any one of claims 1 to 9, wherein it also comprises:
- a wavelength division module (48) positioned between the mode separator module (24) and the array of beam steering mirrors (26) configured to separate spatially the intermediate optical signals (28) according to their wavelength into unitary optical signals (50) having a single wavelength.

11. The MWSS (10) according to claim 10 in which the wavelength division module (48) comprises gratings (54).

12. The MWSS (10) according to any one of claims 1 to 11 in which the mode separator module (24) separates spatially the signals along a first rectilinear direction (V).

13. The MWSS (10) according to claim 12 when it depends on claim 10 or 11, in which the wavelength division module (48) separates spatially the signals along a second rectilinear direction (H) orthogonal to the first rectilinear direction (V).

14. The MWSS (10) according to any one of claims 1 to 13 in which the MWSS (10) comprises at least two arrays of beam steering mirrors (26).

15. A Reconfigurable Optical Add Drop Multiplexer (ROADM) (56) comprising at least a MWSS (10) according to any one of claims 1 to 14.

16. A router comprising at least a MWSS (10) according to any one of claims 1 to 14.
